# EUROPÄISCHE PATENTSCHRIFT

(11) **EP 2 471 243 B1**
(45) Veröffentlichungstag und Bekanntmachung des Hinweises auf die Patenterteilung: **28.01.2015**
(21) Anmeldenummer: 10739314.2
(22) Anmeldetag: 19.07.2010
(51) Int. Cl.: H04L 29/08, H04L 29/06, H04W 84/20, H04W 52/02, H04W 12/10

(54) **VERFAHREN ZUM ÜBERTRAGEN VON DATEN IN EINEM SENSORNETZWERK, SENSORKNOTEN UND ZENTRAL-RECHNER**
METHOD FOR TRANSMITTING DATA IN A SENSOR NETWORK, SENSOR NODE AND CENTRAL PROCESSOR
PROCÉDÉ DE TRANSMISSION DE DONNÉES DANS UN RÉSEAU DE CAPTEURS, NOEUD DE CAPTEURS ET UNITÉ CENTRALE

(30) Priorität: 27.08.2009 DE 102009039097
(43) Veröffentlichungstag der Anmeldung: 04.07.2012
(73) Patentinhaber: Siemens Aktiengesellschaft, 80333 München (DE)
(72) Erfinder: FALK, Rainer, 85435 Erding (DE); HOF, Hans-Joachim, 85057 Ingolstadt (DE)
(86) Internationale Anmeldenummer: PCT/EP2010/060393
(87) Internationale Veröffentlichungsnummer: WO 2011/023461

(56) Entgegenhaltungen:
- DE-A1-102008 007 696
- MILI F ET AL: "Economic-based vs. nature-inspired intruder detection in sensor networks" RISKS AND SECURITY OF INTERNET AND SYSTEMS, 2008. CRISIS '08. THIRD INTERNATIONAL CONFERENCE ON, IEEE, PISCATAWAY, NJ, USA, 28. Oktober 2008 (2008-10-28), Seiten 177-184, XP031410404 ISBN: 978-1-4244-3309-4

## Beschreibung

Die Erfindung betrifft ein Verfahren zum Übertragen von Daten in einem Sensornetzwerk, das zumindest einen Sensorknoten und einen zentralen Rechner umfasst. Die Erfindung betrifft ferner einen Sensorknoten eines Sensornetzwerks sowie einen zentralen Rechner eines Sensornetzwerks. Die Erfindung betrifft schließlich ein Computerprogrammprodukt.

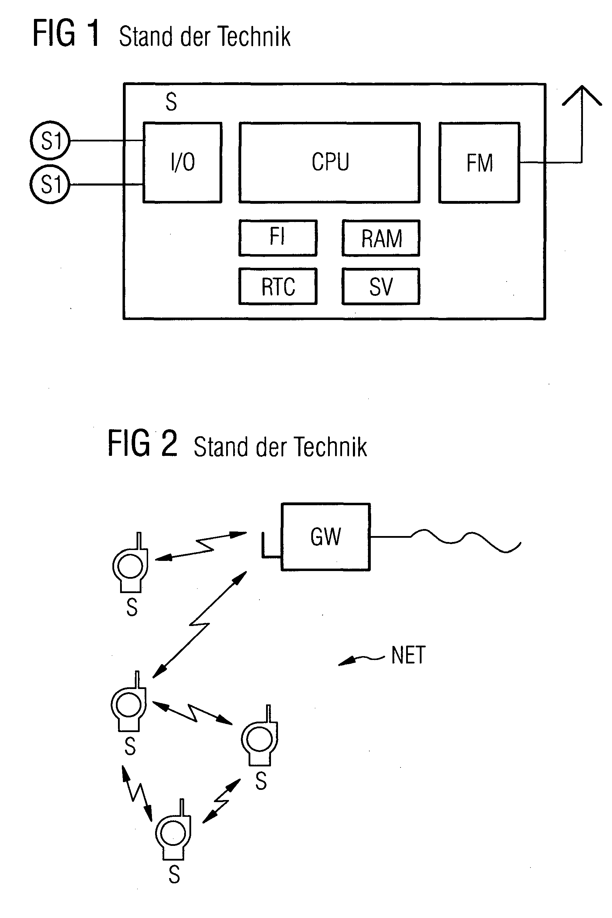

Sensorknoten eines insbesondere drahtlosen Sensornetzes stellen Messdaten und Statusmeldungen über eine drahtlose Schnittstelle bereit. Der typische Aufbau eines Sensorknotens eines drahtlosen Sensornetzwerks ist exemplarisch in Fig. 1 dargestellt. Der Sensorknoten S verfügt über einen Steuerprozessor CPU, einen Programmspeicher F1 sowie einen Arbeitsspeicher RAM. Weiterhin ist eine Ein-/Ausgabeeinheit I/O vorgesehen, an die beispielhaft zwei Sensoren S1, S2 angeschlossen sind. Bei den Sensoren S1, S2 kann es sich beispielsweise um Temperatur und Drucksensoren handeln. Mittels eines Funkmoduls FM, das beispielsweise gemäß dem Standard IEEE 802.15.4, ZigBee, GSM oder UMTS ausgebildet ist, werden Statusmeldungen an einen zentralen Rechner GW gesendet. Weiterhin verfügt der Sensorknoten über eine batteriebetriebene Stromversorgung SV, sofern der Sensorknoten Knoten eines drahtlosen Sensornetzwerks ist.

Fig. 2 zeigt in schematischer Darstellung ein exemplarisches Sensornetzwerk NET, welches mehrere drahtlos kommunizierende Sensorknoten S und einen zentralen Rechner GW, typischerweise ein Gateway, verfügt. Der zentrale Rechner GW ist mit einem Infrastrukturnetzwerk verbunden, beispielsweise dem Internet. Ein solches Sensornetzwerk NET dient beispielsweise zur Überwachung eines größeren Gebiets, z.B. zur Überwachung der Luftverschmutzung in einer Stadt oder zur Überwachung der Bodenfeuchte in einer landwirtschaftlichen Anbaufläche. Es können auch mehrere Sensoren in einem Gebäude zu dessen Klimasteuerung oder zur Feuermeldung oder zum Einbruchsschutz verwendet werden. Die Übertragung von Mess- und/oder Statusdaten an den zentralen Rechner GW kann - je nach Topologie des Sensornetzwerks - auf direkte Weise oder unter Vermittlung eines oder mehrerer Sensorknoten, welche ein Datenpaket von einem sendenden Knoten in Richtung des zentralen Rechners weiterleiten, erfolgen.

Ein Sensornetzwerk im Sinne der Erfindung wird auch durch Fahrzeuge im Rahmen einer Car-2-Car-Kommunikation gebildet. Bei dieser tauschen die Fahrzeuge untereinander Nachrichten aus. In diesen Nachrichten informieren sie sich gegenseitig über ihren aktuellen Ort, ihre Geschwindigkeit und Fahrtrichtung, so dass ein Stau oder eine drohende Kollision erkennbar ist. Ebenso kann eine Information über einen Fahrbahnzustand, wie z.B. eine glatte Stelle, erkannt und anderen Fahrzeugen mitgeteilt werden. In die Fahrzeugkommunikation können auch feste Stationen, sog. Road Side Units, mit einbezogen werden. Eine Statusnachricht im Rahmen einer Car-2-Car-Kommunikation enthält eine Identität des die Statusnachricht sendenden Fahrzeugs (z.B. ein dem Fahrzeug zugeordnetes Pseudonym), einen Sendezeitpunkt, Daten über den Sender (Ort, Geschwindigkeit, Richtung, Beschleunigung) und den Datenwert. Der Datenwert ist beispielsweise durch eine Information über den Fahrbahnzustand repräsentiert. Grundsätzlich kann der Datenwert durch einen Platzhalter repräsentiert sein, wenn lediglich Status über aktuellen Aufenthaltsort und Fahrdaten an den zentralen Rechner übertragen werden sollen. Die Statusnachricht ist durch eine kryptographische Prüfsumme, z.B. eine digitale Signatur, geschützt. Das zur Überprüfung der Signatur erforderliche Zertifikat bzw. die Zertifikatskette kann ebenfalls in der Statusnachricht enthalten sein.

Unabhängig von der Art von den Sensorknoten an den zentralen Rechner GW übertragenen Daten - Messdaten und/oder Statusmeldungen - werden die von den Sensorknoten übertragenen Nachrichten in dieser Beschreibung nachfolgend als Statusnachricht bezeichnet.

Übertragene Statusnachrichten in einem Sensornetzwerk können von einem Angreifer leicht manipuliert werden. Beispielsweise kann ein Angreifer gefälschte Daten in das Sensornetzwerk senden. Es werden deshalb kryptographische Schutzverfahren eingesetzt, um manipulierte Daten zu erkennen und so deren Verwendung verhindern zu können. Bekannt ist in diesem Zusammenhang, einzelne Statusnachrichten, die beispielsweise Messwerte enthalten, jeweils durch eine kryptographische Prüfsumme gegen Manipulation zu schützen.

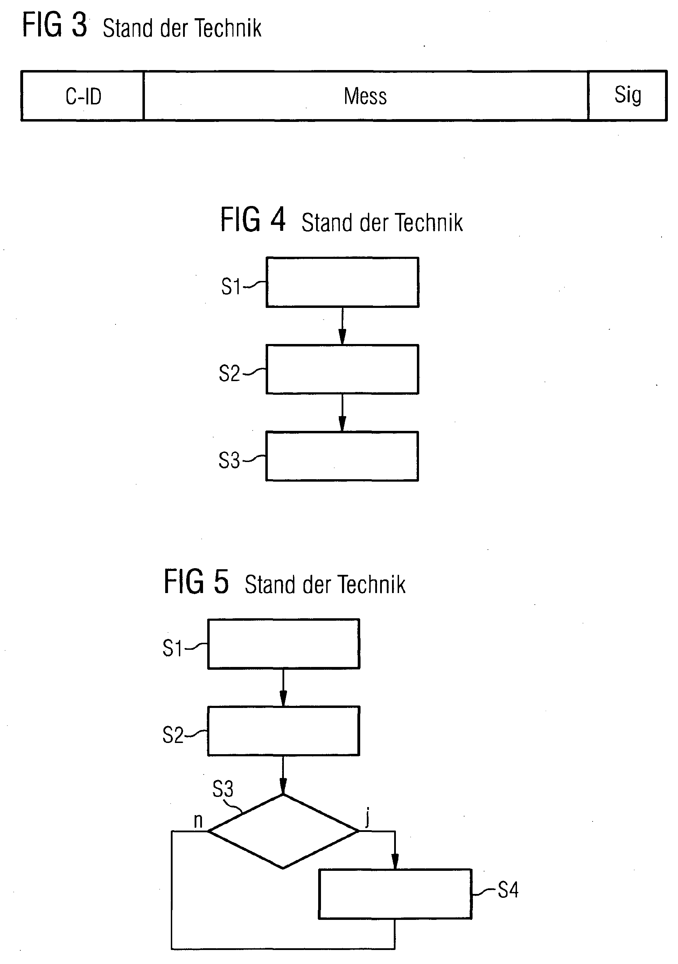

Eine von dem Sensorknoten S an den zentralen Rechner GW übertragene Statusnachricht hat beispielsweise die in Fig. 3 gezeigte Gestalt. Die Statusnachricht M umfasst einen eindeutigen Kennzeichner C-ID, welcher die Identität des Sendeknotens wiedergibt. Beispielsweise kann der eindeutige Kennzeichner eine MAC-Adresse darstellen. Weiterhin umfasst die Statusnachricht M einen Datenwert Mess, welcher Messdaten und/oder Statusinformationen enthalten kann. Messdaten können beispielsweise eine Temperatur, ein Luftdruck, eine Luftfeuchtigkeit und dergleichen, sein. Zum Schutz der Statusnachricht ist in dieser ferner eine Prüfsumme Sig enthalten, welche beispielsweise durch eine digitale Signatur oder einen Message Authentication Code gebildet sein kann. Die Ermittlung der Prüfsumme Sig ist für jede Statusnachricht M erforderlich. Die Ermittlung der Prüfsumme Sig ist je nach verwendetem kryptographischen Verfahren verhältnismäßig aufwändig und benötigt viel Energie, was insbesondere bei batteriebetriebenen Sensorknoten von Bedeutung ist.

Fig. 4 zeigt den Verfahrensablauf zur Erstellung und Übertragung der Statusnachricht M an den zentralen Rechner GW. In einem ersten Schritt S1 wird der Datenwert ermittelt. In einem Schritt S2 wird die Prüfsumme Sig ermittelt. Im dritten Schritt S3 wird die Statusnachricht, einschließlich des Datenwerts Mess und der Prüfsumme Sig von dem Sensorknoten S an den zentralen Rechner GW übertragen. Die Übertragung kann hierbei - wie dies für einen Fachmann ohne Weiteres verständlich ist - auch unter Vermittlung oder Zwischenschaltung mehrerer anderer Sensorknoten erfolgen.

Fig. 5 zeigt den Verfahrensablauf beim Erhalt der Statusnachricht durch den zentralen Rechner GW. In einem ersten Schritt S1 wird die Statusnachricht M durch den zentralen Rechner von dem Sensorknoten, der diese erstellt hat oder einem vermittelndem Sensorknoten, empfangen. In einem zweiten Schritt S2 wird die Prüfsumme Sig, welche in der Statusnachricht enthalten ist, überprüft. Im Schritt S3 wird überprüft, ob die Prüfsumme Sig, welche in der Datennachricht M enthalten ist, korrekt ist. Ist dies der Fall ("j"), so werden die Daten in einem Schritt S4 durch den zentralen Rechner verarbeitet. Ergibt die Überprüfung der Prüfsumme in Schritt S3, dass diese nicht korrekt ist ("n"), so wird der Datenwert Mess verworfen und nicht durch den zentralen Rechner GW verarbeitet. Eine Nichtübereinstimmung der Prüfsumme in der Statusnachricht M und der ermittelten Prüfsumme durch den zentralen Rechner GW deutet auf eine Manipulation der Statusnachricht M hin.

Neben dem Schutz übertragener Statusnachrichten vor Manipulation ist bei Sensornetzwerken eine energieverbrauchseffiziente Betriebsweise der Sensorknoten für deren lange Betriebsdauer unabdingbar, da diese typischerweise durch eine Batterie mit Strom versorgt werden.

Bekannt ist in diesem Zusammenhang, zur Reduktion des Datenaufkommens in Sensornetzwerken erwartete Messwerte durch Prädiktion zu schätzen und die Abweichung von dem Schätzwert zu übertragen. Hierdurch kann die zu übertragende Menge an Daten reduziert werden. Zur Verringerung der Datenmenge ist weiterhin bekannt, einen Messwert nur dann zu übertragen, wenn er ein bestimmtes Kriterium erfüllt, z.B. einen Schwellwert überschreitet oder unterschreitet.

Auch die Verwendung kryptographischer Hash-Ketten sowie deren Verwendung zur Gültigkeitsprüfung von digitalen Zertifikaten ist bereits vorgeschlagen worden.

Eine deutsche Patentanmeldung DE 10 2008 007696 A1 schlägt ein Verfahren zum Betrieb eines Sensorknoten umfassenden drahtlosen Sensornetzwerks vor, bei welchem das Sensornetzwerk Sensorknoten in Nachrichten enthaltene selbst gewonnene und/oder von anderen Sensorknoten enthaltenen Informationen zur Gewinnung eines Bildes über eine aktuelle Lage durch drahtloses Senden und Empfangen von Nachrichten austauscht.

Eine Publikation Mili F. et al., " Economic-based vs. Natureinspired Intruder Detection in Sensor Networks", Risks and Security of Internet and Systems, 2008, CRISIS '08, 3rd International Conference on IEEE, Piscataway, NJ, USA, October 28, 2008, pp. 177-184, beschäftigt sich mit einer Vorgehensweise, um Computernetzwerke von zufälligen und bösartigen Störungen zu schützen.

Es ist daher Aufgabe der vorliegenden Erfindung, ein Verfahren zum energieeffizienten und gegen Manipulation geschützten Übertragen von Daten in einem Sensornetzwerk anzugeben. Ferner sollen ein Sensorknoten und ein zentraler Rechner eines Sensornetzwerks angegeben werden, welche einen energieeffizienten Betrieb des Sensornetzwerks sowie eine manipulationssichere Übertragung von Statusnachrichten erlauben. Eine weitere Aufgabe der Erfindung besteht darin, ein Computerprogrammprodukt anzugeben.

Die Erfindung schafft ein Verfahren zum Übertragen von Daten in einem Sensornetzwerk, das zumindest einen Sensorknoten und einen zentralen Rechner umfasst. Bei dem Verfahren überträgt der zumindest eine Sensorknoten wiederholt eine Statusnachricht an den zentralen Rechner, welche zumindest einen eindeutigen, dem Sensorknoten zugeordneten Kennzeichner und einen von dem Sensorknoten ermittelten Datenwert umfasst. Ferner wird dem zentralen Rechner für den zumindest einen Sensorknoten zumindest eine geschützte Wertebereich-Nachricht bereitgestellt, die für eine jeweilige Zeitspanne gültig ist und die zumindest Schranken für gültige Datenwerte umfasst. Durch den zentralen Rechner wird der in einer Statusnachricht enthaltene Wert nur dann weiterverarbeitet, wenn der Datenwert innerhalb der in der Wertebereich-Nachricht angegebenen Schranken liegt.

Ein Datenwert kann Messdaten und/oder Statusinformationen umfassen. Messdaten sind beispielsweise Temperatur, Luft, Luftfeuchte, Feinstaub und dergleichen. Messdaten können auch als zweiwertiger Wert ("an" oder "aus") vorliegen, z.B. um den Status einer Alarmschleife, eines Fensters oder einer Türe (offen oder geschlossen) anzuzeigen. Auch können Messdaten durch einen Nutzer eingebbar sein, z.B. ein Temperaturwert, der z.B. als Sollwert an eine Temperaturregelung übertragen wird, oder ein Steuerkommando zum Öffnen oder Schließen einer Jalousie oder zum Ein- bzw. Ausschalten einer Beleuchtung. Statusinformationen betreffen einen Betriebsstatus des Sensorknotens, z.B. seinen Batteriestatus, Auslastung oder verfügbaren Speicher.

Unter der Gültigkeit einer Wertebereich-Nachricht wird in der vorliegenden Beschreibung eine zeitliche Spanne von einem ersten Zeitpunkt bis zu einem zweiten Zeitpunkt verstanden. Beispielsweise kann die Wertebereichs-Nachricht für einen Zeitraum von fünf Minuten oder eine halbe Stunde oder dergleichen gültig sein.

Das der Erfindung zu Grunde liegende Prinzip besteht darin, nicht jede einzelne Nachricht, die Datenwerte enthält, durch eine kryptographische Prüfsumme zu schützen. Stattdessen wird eine geschützte, zeitlich befristet gültige Datenstruktur, die als Wertebereich-Nachricht bezeichnet ist, bereitgestellt, welche für einen bestimmten Zeitraum gültige Datenwerte des Sensorknotens beschränkt.

Diesem Vorgehen liegt die Überlegung zu Grunde, dass bei einem Sensorknoten, beispielsweise Messwerte zumindest im normalen Betrieb, gut vorhersagbar sind, wenn sich die gemessene physikalische Größe nur langsam und/oder vorhersagbar ändert. Dies wird für einen effizienten kryptographischen Schutz genutzt, indem eine zeitlich begrenzt gültige Wertebereich-Nachricht für den Sensorknoten bereitgestellt wird.

Das erfindungsgemäße Verfahren ist sowohl für drahtlose als auch drahtgebundene Sensornetzwerke verwendbar. Besondere Vorteile ergeben sich dann, wenn ein Sensorknoten drahtlos eine Datennachricht an den zentralen Rechner bereitstellt.

Bei dem erfindungsgemäßen Verfahren muss nicht jede einzelne Datennachricht kryptographisch oder mit einem rechenaufwändigen Verfahren geschützt werden. Dies erspart einerseits Rechenleistung des Sensorknotens und reduziert dadurch auch dessen Energieverbrauch. Ferner wird die Bearbeitungszeit von Statusnachrichten reduziert, was die Leistungsfähigkeit von Anwendungen in einem Sensornetzwerk erhöht. Weiterhin ermöglicht das Verfahren den Einsatz von kryptographischen Algorithmen, die wegen ihrer Komplexität nicht für den Schutz jeder einzelnen Statusnachricht eingesetzt werden können. Ein weiterer Vorteil besteht darin, dass Manipulationsmöglichkeiten für einen Angreifer beschränkt sind, da er nur in einem begrenzten Bereich manipulierte Messwerte in das Sensornetzwerk einbringen kann.

Zweckmäßigerweise erstellt ein jeweiliger Sensorknoten die zumindest eine geschützte Wertebereich-Nachricht selbst und überträgt diese an den zentralen Rechner. Hierbei ist es von besonderem Vorteil, wenn die Wertebereich-Nachricht eine Prüfsumme umfasst, wodurch die Wertebereich-Nachricht vor Manipulation geschützt ist. Die Prüfsumme kann beispielsweise durch eine digitale Signatur oder einen Message Authentication Code gebildet sein. Beispielsweise kann HMAC-SHA 256 mit einem 128-Bitschlüssel oder eine digitale RSA-Signatur mit 1024 Bit oder 2048 Bit Schlüssellänge, eine digitale Signatur auf Basis elliptischer Kurven (ECDSA mit einer Schlüssellänge von 164 Bit) zum Einsatz kommen.

Insbesondere erlaubt es das erfindungsgemäße Verfahren, dass die Statusnachricht keine Prüfsumme umfasst. Wahlweise kann die Prüfsumme lediglich bei einzelnen Messwerten oder sogar bei sämtlichen Statusnachrichten, die von dem Sensorknoten an den zentralen Rechner übertragen werden, weggelassen werden. Insbesondere kann keine kryptographische Prüfsumme vorhanden sein, die unter Verwendung eines kryptographischen Schlüssels berechnet wird. Ebenso ist möglich, dass nur eine effizient zu berechnende Fehlerschutzprüfsumme, z.B. ein CRC-Code, als Prüfsumme vorhanden ist, die nicht vor Manipulationen schützt. Ist ein besonders starker Schutz notwendig, so kann in einer alternativen Ausgestaltung die Statusnachricht auch eine Prüfsumme umfassen. Dies kann insbesondere genutzt werden, eine kryptographisch stark geschützte Wertebereich-Nachricht zu ergänzen, wobei bevorzugt eine einfache, energieeffizient zu berechnende kryptographische Prüfsumme je Statusnachricht verwendet wird. Die Prüfsumme der Statusnachricht kann beispielsweise eine auf 32 Bit Länge gekürzte Prüfsumme HMAC-MD 5-32, die mit einem 40-Bitschlüssel berechnet wird, sein. Die Prüfsumme der Statusnachricht kann auch mit einem Netzwerk-Schlüssel, d.h. mit einem nicht Sensorknoten-individuellem und damit auch weiteren Sensorknoten bekanntem Schlüssel, geschützt werden.

Gemäß einer weiteren zweckmäßigen Ausgestaltung sind die Schranken der Wertebereich-Nachricht durch eine Obergrenze und eine Untergrenze angegeben. Alternativ können die Schranken der Wertebereich-Nachricht durch einen Referenzwert und einen ein- oder beidseitigen Toleranzwert angegeben sein. In einer weiteren Alternative sind die Schranken der Wertebereich-Nachricht durch eine zeitabhängige Prädiktionsfunktion und eine Toleranz angegeben.

Gemäß einer weiteren zweckmäßigen Ausgestaltung werden die Schranken der Wertebereich-Nachricht und/oder die Zeitspanne der Gültigkeit der Schranken in Abhängigkeit zumindest eines vorgegebenen Parameters angepasst. Der vorgegebene Parameter umfasst gemäß einer Weiterbildung
- eine zeitliche Änderungsgeschwindigkeit des Datenwerts und/oder
- einen oder mehrere statistische Werte zur Erfassung der Steuerung des Datenwerts und/oder
- einen Ladezustand eines Energiespeichers des Sensorknotens und/oder
- eine Häufigkeit, mit der die Statusnachrichten an den zentralen Rechner übertragen werden.

Eine weitere vorteilhafte Ausgestaltung sieht vor, dass der zumindest eine Sensorknoten und der zentrale Rechner zeitlich zueinander synchronisiert werden. Für das Senden und Empfangen von Statusnachrichten ist ein Zeitbezug zweckmäßig. Es kann dazu die Echtzeit, d.h. die absolute Uhrzeit, verwendet werden. Diese kann beispielsweise über einen GPS-Empfänger oder einen DCF77-Empfänger (sog. Zeitsignalsender) erhalten werden. Alternativ kann auch eine lokale Uhrzeitinformation des Sensorknotens verwendet werden, da nur die Differenz zwischen aktueller Zeit und dem Ausstellungszeitpunkt der Wertebereich-Nachricht bekannt sein muss. Dann ist jedoch ein Aufsynchronisieren eines Empfängers auf die virtuelle Knotenzeit des Sensors notwendig. Dies ist beispielsweise bei Verwendung einer Hash-Kette möglich, wie diese in einer weiteren Ausgestaltungsform vorgesehen ist. Hierbei antwortet der Sensorknoten auf eine Nachricht (sog. Challenge c) mit einem Hash-Wert H(next_hash c). Solange weder der Wert next_hash noch der Wert des nächsten Elements der Hash-Kette veröffentlicht wurde, kann außer dem Sensorknoten kein anderer Sensorknoten die Antwort berechnen. Prüfen kann es lediglich der zentrale Rechner, sobald der Sensorknoten den nächsten Wert der Hash-Kette (next_häsh) veröffentlicht. Dieses gestützte Aufsynchronisieren ist bekannt durch das Protokoll µTesla.

In einer weiteren Ausgestaltung wird die Wertebereich-Nachricht regelmäßig wiederkehrend von dem zumindest einen Sensorknoten an den zentralen Rechner übertragen. Alternativ wird die Wertebereich-Nachricht auf Anforderung des zentralen Rechners von dem zumindest einen Sensorknoten an den zentralen Rechner übertragen.

Gemäß einer weiteren vorteilhaften Ausgestaltung umfasst die Wertebereich-Nachricht, insbesondere die Prüfsumme der Wertebereich-Nachricht, einen Ankerwert und, optional die Länge, einer Hash-Kette. Hierdurch kann eine weiter verbesserte Sicherheit gegen Manipulation erreicht werden. Dieses Vorgehen ist entsprechend für die Gültigkeitsprüfung von digitalen Zertifikaten bekannt.

Eine weitere Ausgestaltung sieht vor, dass mehrere Wertebereich-Nachrichten für einen jeweiligen Sensorknoten bereitgestellt werden, wobei die mehreren Wertebereich-Nachrichten jeweils unterschiedliche Schranken und jeweils einen unterschiedlichen Ankerwert einer jeweils unterschiedlichen Hash-Kette umfassen. Je nach aktuellem Datenwert wird hierbei der aktuelle Wert der Hash-Kette derjenigen Wertebereich-Nachricht veröffentlicht, in deren Wertebereich der aktuelle Messwert liegt. Hierdurch kann verhindert werden, dass ein Datenwert aus dem gültigen Wertebereich einer Wertebereich-Nachricht "herausläuft" und eine erneute Übertragung einer angepassten Wertebereich-Nachricht erforderlich wird.

Gemäß einer weiteren vorteilhaften Ausgestaltung ist vorgesehen, dass die Daten mehrerer Wertebereich-Nachrichten in einer Super-Wertebereich-Nachricht zusammengefasst werden, wobei die Super-Wertebereich-Nachricht eine Prüfsumme umfasst. Gemäß dieser Weiterbildung werden nicht mehrere separat durch jeweils eine eigene Prüfsumme geschützte Wertebereich-Nachrichten erzeugt, sondern die mehreren Wertebereich-Nachrichten werden zu einer Datenstruktur zusammengefasst, (z.B. aneinandergereiht) und gemeinsam durch eine (einzige) kryptographische Prüfsumme geschützt.

In diesem Zusammenhang ist es zweckmäßig, wenn die Schranken der mehreren Wertebereich-Nachrichten überlappungsfrei oder alternativ überlappend zueinander angeordnet sind.

Die Erfindung umfasst ferner ein Computerprogrammprodukt, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf einem Computer läuft.

Die Erfindung schafft weiter einen Sensorknoten für die Verwendung in einem Sensornetzwerk zur Durchführung des erfindungsgemäßen Verfahrens. Der erfindungsgemäße Sensorknoten ist dazu eingerichtet, wiederholt eine Statusnachricht an den zentralen Rechner zu übertragen, welche zumindest einen eindeutigen, dem Sensorknoten zugeordneten Kennzeichner und einen von dem Sensorknoten ermittelten Datenwert umfasst. Der Sensorknoten ist weiter dazu eingerichtet, dem zentralen Rechner für den zumindest einen Sensorknoten zumindest eine geschützte Wertebereich-Nachricht bereitzustellen, die für eine jeweilige Zeitspanne gültig ist und die zumindest Schranken für gültige Datenwerte umfasst.

Die Erfindung schafft weiter einen Zentral-Rechner für die Verwendung in einem Sensornetzwerk zur Durchführung des erfindungsgemäßen Verfahrens. Der Zentral-Rechner ist dazu eingerichtet, von zumindest einem Sensorknoten wiederholt eine Statusnachricht zu empfangen, welche zumindest einen eindeutigen, dem Sensorknoten zugeordneten Kennzeichner und einen von dem Sensorknoten ermittelten Datenwert umfasst. Der Zentral-Rechner ist weiter dazu eingerichtet, für den zumindest einen Sensorknoten zumindest eine geschützte Wertebereich-Nachricht zu empfangen, die für eine jeweilige Zeitspanne gültig ist und die zumindest Schranken für gültige Datenwerte umfasst. Schließlich ist der Zentral-Rechner dazu eingerichtet, den in einer Statusnachricht enthaltenen Wert nur dann zu verarbeiten, wenn der Datenwert innerhalb der in der Wertebereich-Nachricht angegebenen Schranken liegt.

Hiermit sind die gleichen Vorteile verbunden, wie diese vorstehend in Verbindung mit dem erfindungsgemäßen Verfahren beschrieben wurden.

Die Erfindung wird nachfolgend näher anhand der Figuren erläutert. Es zeigen:
- Fig. 1: eine schematische Darstellung eines aus dem Stand der Technik bekannten Sensorknotens,
- Fig. 2: eine schematische Darstellung eines bekannten Sensornetzwerks,
- Fig. 3: eine schematische Darstellung einer im Stand der Technik verwendeten Statusnachricht, welche von einem Sensorknoten an einen zentralen Rechner des Sensornetzwerks übertragen wird,
- Fig. 4: Verfahrensschritte beim Senden einer Statusnachricht gemäß dem Stand der Technik,
- Fig. 5: Verfahrensschritte beim Empfangen einer Statusnachricht durch den zentralen Rechner gemäß dem Stand der Technik,
- Fig. 6: eine erfindungsgemäß verwendete Wertebereich-Nachricht in einer schematischen Darstellung,
- Fig. 7: eine exemplarische Darstellung einer erfindungsgemäßen Wertebereich-Nachricht,
- Fig. 8: die erfindungsgemäß durchgeführten Verfahrensschritte beim Senden einer Statusnachricht durch einen Sensorknoten,
- Fig. 9: die erfindungsgemäß durchgeführten Verfahrensschritte beim Empfang einer Statusnachricht durch einen zentralen Rechner des Sensornetzwerks,
- Fig. 10 und 11: schematische Darstellungen erfindungsgemäß aufgebauter Statusnachrichten,
- Fig. 12: eine exemplarische Wertebereich-Nachricht in einer abgewandelten Ausgestaltung,
- Fig. 13: den prinzipiellen Aufbau einer Hash-Kette,
- Fig. 14: die Verwendung einer Hash-Kette in Verbindung mit einer Wertebereich-Nachricht gemäß einer Ausgestaltung des erfindungsgemäßen Verfahrens,
- Fig. 15: eine exemplarische Darstellung einer Super-Wertebereich-Nachricht, und
- Fig. 16: eine abgewandelte Verwendung von Hash-Ketten in Verbindung mit einer Super-Wertebereich-Nachricht.

Die Figuren 1 bis 5, welche das aus dem Stand der Technik bekannte Vorgehen zum Übertragen von Daten in einem Sensornetzwerk NET mit zumindest einem Sensorknoten S und einem zentralen Rechner GW illustrieren, wurden einleitend bereits erläutert. Das erfindungsgemäße Verfahren baut auf diesem Vorgehen auf und bildet dieses in vorteilhafter Weise weiter.

Um einen energieeffizienten Betrieb der Sensorknoten S für deren lange Betriebsdauer sowie einen hohen Schutz vor Manipulation der übertragenen Statusnachrichten M durch einen Angreifer bereitstellen zu können, schlägt die Erfindung vor, zusätzlich zu den wiederholt von einem Sensorknoten S an den zentralen Rechner GW übertragenen Statusnachrichten zumindest eine geschützte Wertebereich-Nachricht WBS an den zentralen Rechner GW zu übertragen. Die geschützte Wertebereich-Nachricht WBS wird vorzugsweise durch den die Statusnachrichten M an den zentralen Rechner GW übertragenden Sensorknoten selbst erstellt. Die geschützte Wertebereich-Nachricht WBS ist für eine jeweilige Zeitspanne gültig und umfasst zumindest Schranken für gültige Datenwerte. Durch den zentralen Rechner GW wird der in einer Statusnachricht enthaltene Wert nur dann weiterverarbeitet, wenn der Datenwert innerhalb der in der Wertebereich-Nachricht angegebenen Schranken liegt.

Der Vorteil dieser Vorgehensweise besteht darin, dass nicht für jede einzelne Statusnachricht (und somit jeden einzelnen Datenwert) separat ein kryptographischer Schutz erzeugt werden muss. Hierdurch wird Rechenleistung in dem Sensorknoten eingespart. Dadurch kann der Energieverbrauch des Sensorknotens S verringert werden. Insbesondere wird auch die Bearbeitungszeit von Nachrichten reduziert, wodurch die Leistungsfähigkeit von Sensornetz-Anwendungen sich erhöht. Für die Wertebereich-Nachricht WBS können hingegen komplexe kryptographische Algorithmen eingesetzt werden, welche aufgrund ihrer Komplexität nicht für den Schutz jeder einzelnen Statusnachricht verwendet werden können. Ferner sind Manipulationsmöglichkeiten für einen Angreifer beschränkt, da er nur in einem begrenzten Bereich manipulierte Datenwerte "einspielen" kann.

Mit dem erfindungsgemäßen Verfahren werden Datenwerte (z.B. Messwerte) eines Sensors zuverlässig geschützt, wobei ein verringerter Rechenleistungs- und Energieverbrauch erreicht wird im Vergleich zu dem bekannten Vorgehen, jede Statusnachricht jeweils einzeln kryptographisch zu schützen. Dies wird dadurch erkauft, dass nicht jeder Datenwert (bitgenau) geschützt wird. Vielmehr ist es bei dem erfindungsgemäßen Verfahren ausreichend, wenn ein Angreifer die Datenwerte nur geringfügig innerhalb der vorgegebenen Schranken verändern kann.

Dies ist vorteilhaft beim Schutz von Datenwerten durch eine digitale Signatur, da für die Signaturberechnung eine große Rechenleistung und damit ein hoher Energieverbrauch erforderlich ist. Eine Signatur wird benötigt, wenn prinzipiell beliebige, vorab nicht bekannte Empfänger die Gültigkeit des Datenwerts prüfen können sollen. Damit ist das Verfahren beispielsweise geeignet für öffentliche Sensorknoten oder Fahrzeugnetze.

Das Verfahren ist ferner effizient für Datenwerte, die naturgemäß viel Redundanz enthalten. Beispielsweise ändert sich die Temperatur häufig nur langsam und liegt in einem relativ engen Wertebereich.

Ferner ist es nicht erforderlich, jede übertragene Statusnachricht zu schützen. Es ist ausreichend zu wissen, dass der aktuell gemessene Wert noch innerhalb eines gewissen Bereichs liegt, welcher durch die Schranken in der Wertebereich-Nachricht vorgegeben ist. Hierfür wird jedoch ein äußerst effizienter Schutz erreicht.

Das Verfahren optimiert ferner die Verarbeitungszeit von Statusnachrichten, da nicht mehr für jede Nachricht aufwändige kryptographische Operationen durchgeführt werden müssen. Weiterhin ermöglicht das Verfahren die Verwendung von starken kryptographischen Verfahren, die aufgrund ihres Rechenleistungsbedarfs nicht für den Schutz einzelner Statusnachrichten eingesetzt werden können.

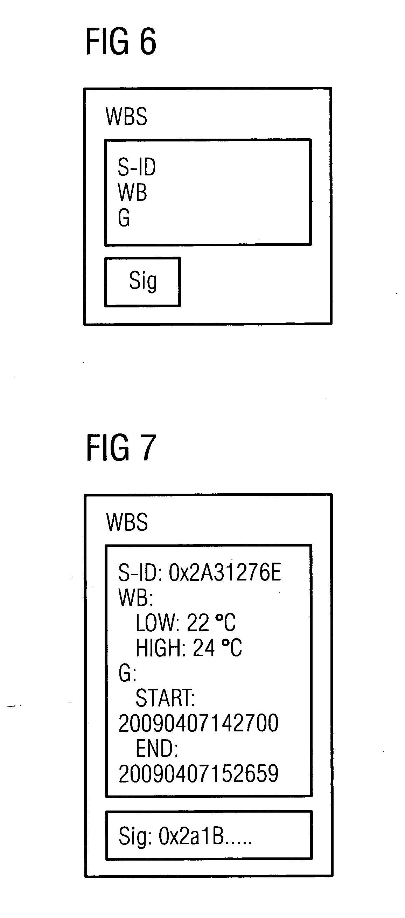

Fig. 6 zeigt eine schematische Darstellung einer erfindungsgemäßen Wertebereich-Nachricht WBS. Diese umfasst einen eindeutigen Kennzeichner S-ID, eine Wertebereichsangabe WB sowie eine Gültigkeitsangabe G. Darüber hinaus ist die Wertebereich-Nachricht WBS durch eine kryptographische Prüfsumme Sig geschützt.

Fig. 7 zeigt ein konkretes Beispiel für eine Wertebereich-Nachricht WBS: Der eindeutige Kennzeichner S-ID der Wertebereich-Nachricht WBS lautet: "0x2A31276E". Als bestätigter Wertebereich WB ist eine Temperatur zwischen 22 °C (LOW: unterer Wert) und 24 °C (HIGH: oberer Wert) angegeben. Die zeitliche Gültigkeit G ist angegeben als Startzeitpunkt und Endzeitpunkt im Format YYYYMMDDHHMMSS, wobei YYYY das Jahr, MM der Monat, DD der Tag, HH die Stunde, MM die Minute und SS die Sekunde repräsentieren. Dies bedeutet, die Wertebereich-Nachricht WBS ist gültig vom 07.04.2009, 14:27:00 bis zum 07.04.2009, 15:26:59.

Der Wert der kryptographischen Prüfsumme Sig ist lediglich angedeutet. Es handelt sich hier um einen Wert, der mittels eines bekannten Verfahrens, z.B. HMAC-SHA1, AES-CBC-MAC, RSA-Signatur, DSA-Signatur, ECDSA-Signatur und dergleichen, zur Berechnung einer kryptographischen Prüfsumme berechnet wird.

Alternativ könnte der Wertebereich WB auch als ein Referenzwert und eine Toleranz (z.B. die maximal erlaubte absolute oder prozentuale Abweichung von dem Referenzwert) angegeben sein. Die zeitliche Gültigkeit kann beispielsweise auch durch einen Startwert und eine Dauer angegeben sein. Zweckmäßigerweise wird eine aktuelle Wertebereich-Nachricht nicht nur nach deren Erzeugen von dem Sensorknoten an den zentralen Rechner GW übertragen. Es ist vorteilhaft, die aktuelle Wertebereich-Nachricht WBS wiederkehrend, z.B. jede Minute, an den zentralen Rechner zu übertragen. In einer weiteren Ausgestaltung könnte die aktuelle Wertebereich-Nachricht auch auf Anfrage des zentralen Rechners GW von dem entsprechenden Sensorknoten erneut übertragen werden.

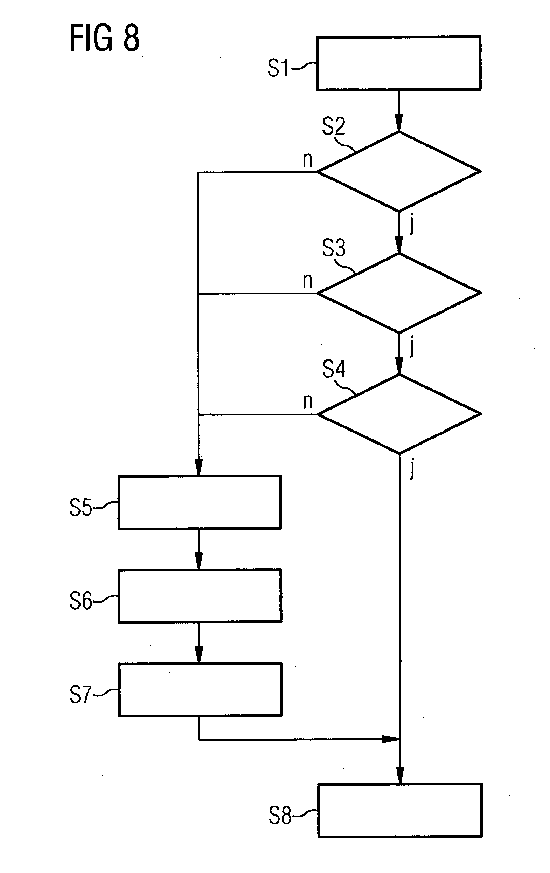

Fig. 8 zeigt den Verfahrensablauf des erfindungsgemäßen Verfahrens beim Senden einer Statusnachricht an den zentralen Rechner GW. In einem ersten Schritt S1 wird durch den Sensorknoten ein Datenwert ermittelt. In Schritt S2 wird überprüft, ob für den Sensorknoten eine Wertebereich-Nachricht WBS vorliegt. Ist dies nicht der Fall ("n"), so wird in Schritt S5 eine neue Wertebereich-Nachricht WBS bestimmt. Diese umfasst, wie erläutert, eine Wertebereich-Angabe und eine Gültigkeitsangabe G. In Schritt S6 wird die kryptographische Prüfsumme für die Wertebereich-Nachricht ermittelt. In Schritt S7 wird die erstellte Wertebereich-Nachricht einschließlich der kryptographischen Prüfsumme Sig an den zentralen Rechner übertragen. Anschließend wird in Schritt S8 die Statusnachricht einschließlich des in Schritt 1 ermittelten Datenwerts an den zentralen Rechner GW übermittelt.

Ist in Schritt S2 die Wertebereich-Nachricht WBS für den Sensorknoten S vorhanden ("j"), so wird in Schritt S3 überprüft, ob die Wertebereich-Nachricht aktuell ist. Dies bedeutet, es wird überprüft ob die aktuelle Zeit innerhalb der Gültigkeitsangabe G der aktuellen Wertebereich-Nachricht WBS liegt. Ist dies nicht der Fall ("n"), so werden die Schritte S5, S6 und S7 zunächst durchlaufen. Ist die Wertebereich-Nachricht WBS hingegen in Schritt S3 aktuell ("j"), so wird in Schritt S4 überprüft, ob ein Messwert im durch die Wertebereich-Nachricht WBS bestätigten Bereich WB liegt. Ist dies der Fall ("j"), so wird in Schritt S8 die Statusnachricht einschließlich des Datenwerts an den zentralen Rechner GW übertragen. Liegt der Datenwert außerhalb des durch die Wertebereich-Nachricht definierten Wertebereichs ("n"), so werden die Schritte S5, S6 und S7 durchlaufen, wobei die Statusnachricht nicht an den zentralen Rechner übertragen wird.

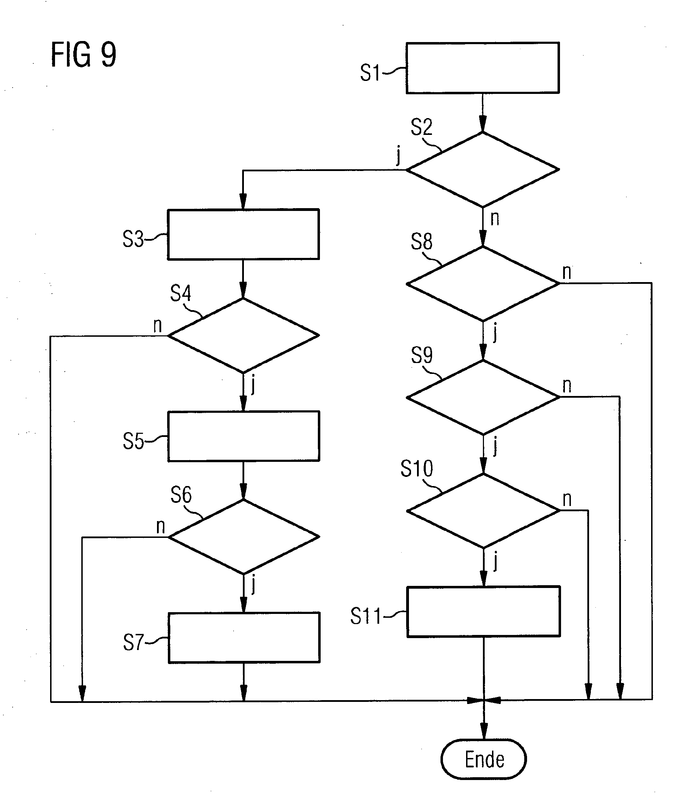

Fig. 9 illustriert den Verfahrensablauf beim Erhalt einer Statusnachricht M durch den zentralen Rechner GW. In Schritt S1 wird eine Statusnachricht M empfangen. In Schritt S2 wird überprüft, ob die erhaltene Nachricht eine Wertebereich-Nachricht WBS ist. Ist dies der Fall ("j"), so wird in Schritt S3 die kryptographische Prüfsumme der Wertebereich-Nachricht WBS überprüft. In Schritt S4 wird deren Gültigkeit überprüft. Ist diese nicht gültig ("n"), so endet das Verfahren an dieser Stelle. Ist die kryptographische Prüfsumme Sig der Wertebereich-Nachricht WBS hingegen gültig ("j"), so wird in Schritt S5 die zeitliche Gültigkeit der Wertebereich-Nachricht WBS überprüft. In Schritt S6 endet das Verfahren in dem Fall, in dem die zeitliche Gültigkeit nicht gegeben ist ("n"). Ist die zeitliche Gültigkeit hingegen korrekt ("j"), so wird in Schritt S7 die Wertebereich-Nachricht WBS gespeichert.

Wurde in Schritt S2 festgestellt, dass die empfangene Nachricht keine Wertebereich-Nachricht WBS ("n") ist, so wird in Schritt S8 überprüft, ob es sich um einen Datenwert handelt. Ist dies nicht der Fall, so endet das Verfahren an dieser Stelle. In diesem Fall könnte es sich beispielsweise um eine Routing-Nachricht handeln. Wurde mit der empfangenen Nachricht ein Datenwert empfangen ("j" in Schritt S8), so wird in Schritt S9 überprüft, ob für den sendenden Sensorknoten S eine aktuelle Wertebereich-Nachricht WBS vorliegt. Ist dies nicht der Fall ("n"), so endet das Verfahren. In diesem Fall könnte durch den zentralen Rechner GW eine Wertebereich-Nachricht angefordert werden. Liegt hingegen für den Sensorknoten eine aktuelle Wertebereich-Nachricht WBS vor ("j"), so wird in Schritt S10 überprüft, ob der Datenwert in dem durch die Wertebereich-Nachricht WBS bestätigten Bereich liegt. Ist dies der Fall ("j"), so wird in Schritt S11 der Datenwert verwendet. Andernfalls ("n") endet das Verfahren und der Datenwert wird nicht verwendet. In diesem Fall könnte ein Angriff vorgelegen haben.

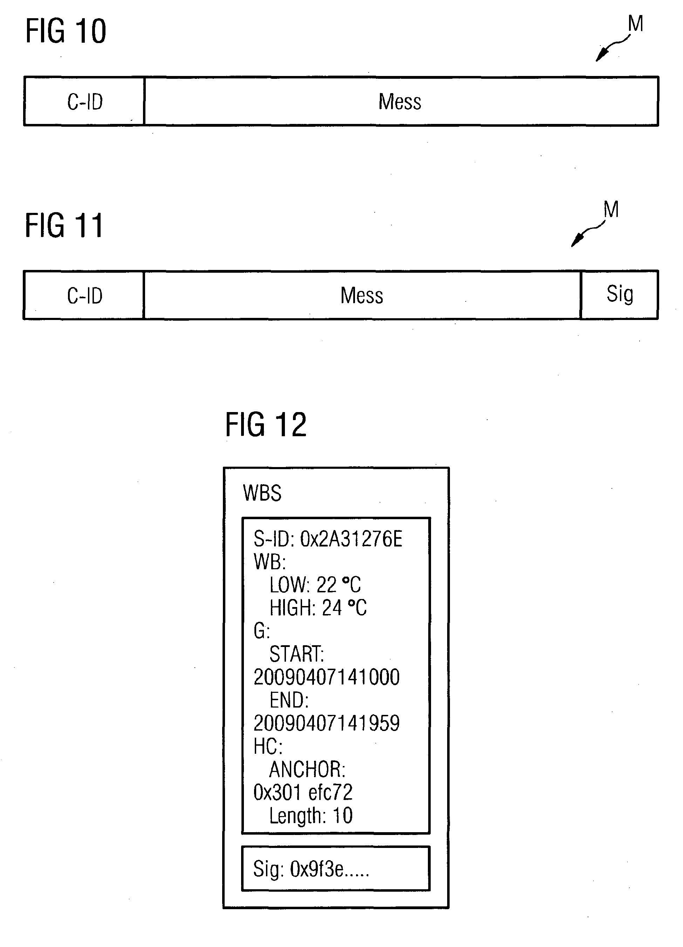

Die Figuren 10 und 11 zeigen in schematischer Darstellung den Aufbau einer Statusnachricht M bei Verwendung des erfindungsgemäßen Verfahrens. In der einfachsten Variante gemäß Fig. 10 enthält eine Statusnachricht lediglich einen eindeutigen Kennzeichner C-ID und den Datenwert Mess. Im Gegensatz zu Statusnachrichten aus dem Stand der Technik ist in dieser Variante keine kryptographische Prüfsumme notwendig, da der Datenwert über die Wertebereichsangabe und die Gültigkeit der Wertebereich-Nachricht WBS geschützt ist. In der in Fig. 11 gezeigten Variante ist zusätzlich eine kryptographische Prüfsumme Sig vorgesehen, die zusätzlich zur Wertebereich-Nachricht geprüft wird. Hierdurch wird eine erhöhte Sicherheit erreicht.

Eine Wertebereich-Nachricht kann in einer Weiterbildung einen Ankerwert ANCHOR einer sog. Hash-Kette HC enthalten. Dies ist bei Gültigkeitsprüfungen von digitalen Zertifikaten bekannt. Eine Hash-Kette der Länge n beginnt, ausgehend von einem kryptographischen (pseudo-)zufällig gewählten Wert R1. Von diesem ausgehend werden nun die Werte der Hash-Kette berechnet, so dass
R2:=H(R1), R3:=H(R2), ..., Rn:=H(R(n-1)).

H() repräsentiert dabei eine kryptographische Hash-Funktion, z.B. gemäß MD5, SHA-1, SHA256. Der letzte Wert Rn der Hash-Kette stellt den sog. Anker dar, der in den nachfolgenden Zeichnungen mit ANCHOR gekennzeichnet ist.

Eine Eigenschaft kryptographischer Hash-Funktionen ist, dass diese nicht praktikabel invertierbar sind. Dies bedeutet, von einem Ausgangswert kann nicht praktikabel auf einen Eingangswert geschlossen werden, der zu diesem Ausgangswert führt. Dadurch kann eine Hash-Kette in der einen Richtung (d.h. im Index 1 → 2 → ... → n) leicht berechnet werden. Eine einfache Berechnung in umgekehrter Richtung ist jedoch nicht möglich.

Diese Eigenschaften von Hash-Ketten werden im vorliegenden Verfahren derart verwendet, dass in einer Wertebereich-Nachricht WBS der Anker-Wert einer Hash-Kette zusätzlich mit aufgenommen wird. Die Elemente der Hash-Kette sind jeweils einer gewissen Zeitdauer der gesamten Gültigkeitsdauer der Wertebereich-Nachricht WBS zugeordnet, z.B. eine Sekunde, eine Minute, eine Stunde.

Wenn ein Sensorknoten S nun zu einem bestimmten Zeitpunkt einen Datenwert Mess in einer Statusnachricht M überträgt, so überträgt er in der Statusnachricht auch den Wert desjenigen Werts der Hash-Kette, der dem aktuellen Zeitpunkt entspricht. Hierdurch wird bestätigt, dass in diesem Zeitraum der Datenwert im bestätigten Wertebereich liegt. Der Empfänger, d.h. der zentrale Rechner GW, überprüft zusätzlich, bevor er einen empfangenen Datenwert Mess verwendet, ob für den aktuellen Zeitpunkt der entsprechende Wert der Hash-Kette bekannt gemacht wurde.

Ein Angreifer kann somit eine Wertebereich-Nachricht nicht mehr während deren gesamter Gültigkeitsdauer missbräuchlich verwenden, sondern nur, solange die Gültigkeit der Wertebereich-Nachricht WBS durch den Sensorknoten S durch Veröffentlichen des aktuellen Werts der Hash-Kette bestätigt wird.

Eine Wertebereich-Nachricht WBS mit einer Gültigkeitsdauer G von zehn Minuten und einer Länge "Length" der Hash-Kette HC von zehn Elementen ist in Fig. 12 exemplarisch dargestellt. Die Wertebereich-Nachricht WBS enthält somit zusätzlich Angaben zu der Hash-Kette HC, nämlich den Ankerwert ANCHOR und deren Länge (Length). Hier ergibt sich, dass jeweils einer Minute ein Wert der Hash-Kette HC zugeordnet ist. Anstatt der Länge der Hash-Kette könnte auch das zeitliche Raster, d.h. die Gültigkeit jedes Elements der Hash-Kette HC angegeben sein (hier: eine Minute).

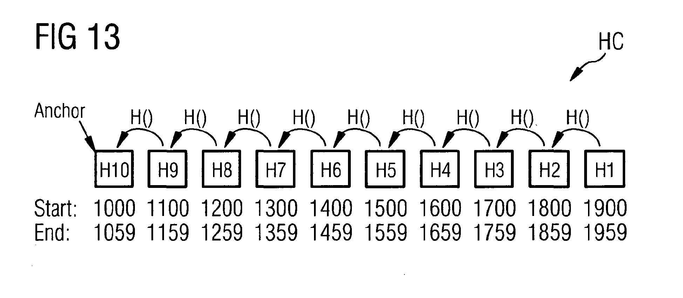

Fig. 13 zeigt die Hash-Kette, d.h. die Werte, die ausgehend von einem kryptographischen (pseudo-)zufällig gewählten Wert H1 ausgehend berechnet werden. Der Ankerwert (ANCHOR) ist der Wert H10. Dies ist der Wert, der in der Wertebereich-Nachricht WBS angegeben ist. Jedem Element der Hash-Kette ist ein zeitlicher Bereich zugeordnet (Start, End), der für die Darstellung verkürzt im Format MMSS (MM Minute, SS Sekunde) angegeben ist. Der Wert "1700" des Werts H3 entspricht (in Verbindung mit den Angaben der Wertebereich-Nachricht WBS aus Fig. 12) ausgeschrieben der Zeitangabe "20090470141700".

In einer Variante bereitet der Sensorknoten mehrere Wertebereich-Nachrichten vor, die jeweils einen unterschiedlichen Wertebereich angeben und jeweils den Ankerwert einer jeweils unterschiedlichen Hash-Kette enthalten. Je nach aktuellem Datenwert wird der aktuelle Wert der Hash-Kette derjenigen Wertebereich-Nachricht veröffentlicht, in deren Wertebereich der aktuelle Messwert liegt. Auf diese Weise kann das Herauslaufen eines Datenwerts aus dem Wertebereich einer Wertebereich-Nachricht verhindert werden. Dadurch sind unter Umständen die Neuerstellung und das Übertragen einer angepassten Wertebereich-Nachricht nicht notwendig.

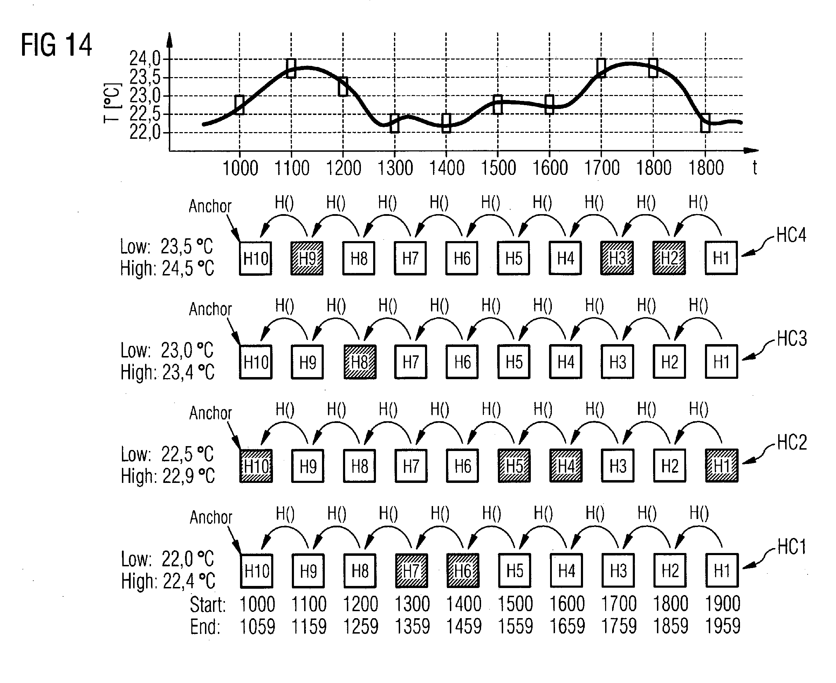

Das Vorgehen ist schematisch in Fig. 14 dargestellt. In der obersten Graphik ist der Verlauf einer zu messenden Temperatur in Abhängigkeit der Zeit t dargestellt. Unterhalb des Temperatur-Zeitverlaufs sind vier Hash-Ketten HC1, HC2, HC3 und HC4 dargestellt. Die Hash-Kette HC1 ist hierbei einem Temperaturbereich von 22,0 °C bis 22,4 °C zugeordnet. Die Hash-Kette HC2 ist einem Temperaturbereich von 22,5 °C bis 22,9 °C zugeordnet. Die Hash-Kette HC3 ist einem Temperaturbereich von 23,0 °C bis 23,4 °C zugeordnet. Die Hash-Kette HC4 ist einem Temperaturbereich von 23,5 °C bis 24,0 °C zugeordnet. In der Figur ist der untere Temperaturwert jeweils mit LOW der obere Temperaturwert mit HIGH gekennzeichnet. Jeweils zur vollen Minute wird in der Darstellung ein Datenwert erfasst. Dies ist im Temperaturverlauf durch die senkrechten Linien zur vollen Minute gekennzeichnet, wobei die Darstellung wieder verkürzt im Format MMSS (mit MM Minute, SS Sekunde) angegeben ist. Es wird dann der aktuelle Hash-Wert derjenigen Hash-Kette HC1, HC2, HC3 oder HC4 veröffentlicht, in deren Wertebereich der aktuelle Datenwert fällt. Der veröffentlichte Hash-Wert ist in Fig. 14 gestrichelt gekennzeichnet. Wie der Fig. 14 ohne Weitere zu entnehmen ist, liegt die Temperatur zum Zeitpunkt "1000" im Bereich zwischen 22,5 °C und 23 °C. Es wird deshalb der Hash-Wert H10 der Hash-Kette HC2 veröffentlicht. Zum Zeitpunkt "1100" liegt die Temperatur im Bereich zwischen 23,5 °C und 24 °C. Dementsprechend wird der Hash-Wert H9 der Hash-Kette HC4 veröffentlicht usw.

Entgegen der Beschreibung ist nicht mehr die Übertragung des eigentlichen Datenwerts notwendig. Es braucht gemäß einer Ausgestaltung nur noch der aktuelle Wert der zugehörigen Hash-Kette an den zentralen Rechner GW übertragen werden.

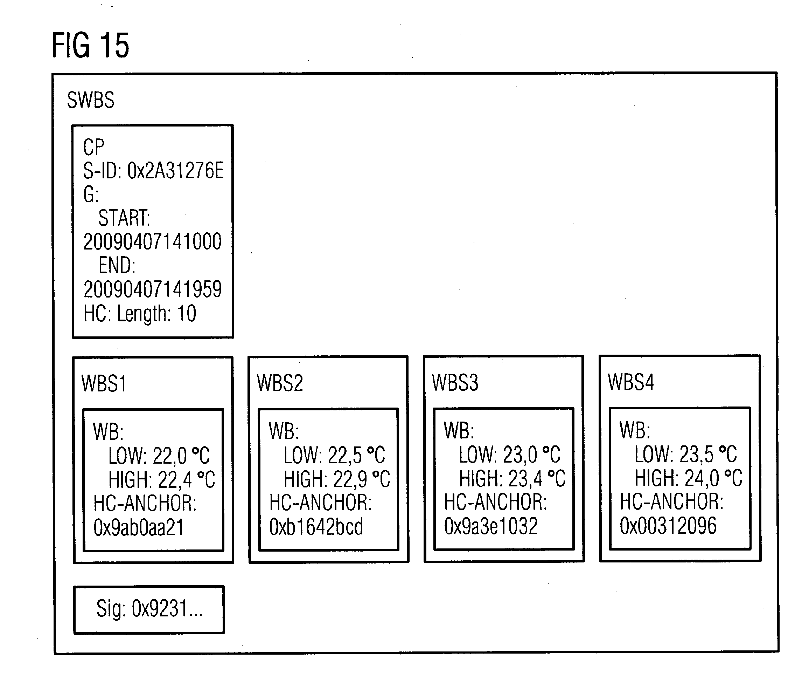

Eine andere Ausgestaltung sieht vor, dass nicht mehrere separat durch jeweils eine eigene kryptographische Prüfsumme geschützte Wertebereich-Nachrichten erzeugt werden, sondern die mehreren Wertebereich-Nachrichten werden zu einer Datenstruktur zusammengefasst, z.B. aneinandergereiht, und gemeinsam durch eine kryptographische Prüfsumme Sig geschützt. Eine derartige Wertebereich-Nachricht wird als Super-Wertebereich-Nachricht SWBS bezeichnet. Diese ist exemplarisch in Fig. 15 dargestellt. Die Super-Wertebereich-Nachricht SWBS umfasst einen gemeinsamen Teil CP. Dieser enthält die für die einzelnen Wertebereich-Nachrichten WBSi (mit i = 1 bis n, hier: n=4) gemeinsamen Daten, nämlich den eindeutigen Kennzeichner S-ID, den Gültigkeitszeitraum G sowie eventuell die Länge der Hash-Ketten HC-Length. Weiterhin sind mehrere Sub-Wertebereich-Nachrichten enthalten, im vorliegenden Ausführungsbeispiel vier: WBS1, WBS2, WBS3, WBS4. Diese spezifizieren hier jeweils einen Wertebereich WB und einen optionalen Ankerwert HC-ANCHOR der jeweiligen Hash-Kette. Die gesamte Datenstruktur der Super-Wertebereich-Nachricht SWBS ist durch eine gemeinsame digitale Prüfsumme Sig geschützt.

In dieser Ausgestaltungsvariante wird ein Wertebereich, der durch die Schranken LOW and HIGH definiert ist, jeweils durch eine Hash-Kette repräsentiert. Wenn, wie im Ausführungsbeispiel der Fig. 15, die Wertebereiche der Sub-Wertebereich-Nachrichten WBS1, WBS2, WBS3 und WBS4 überlappungsfrei sind, so wird zu jedem Zeitschritt genau ein Hash-Wert bekannt gemacht: der Hash-Wert desjenigen Wertebereichs, in den der aktuelle Messwert fällt.

In einer Alternative können die Wertebereiche auch überlappend sein. Dann wird von all denjenigen Hash-Ketten der aktuelle Hash-Wert veröffentlicht, bei denen der aktuelle Messwert in den jeweiligen Wertebereich fällt. Wenn der aktuelle Messwert in keinen Wertebereich fällt, dann wird kein Hash-Wert veröffentlicht.

In einer weiteren Variante kann eine weitere Hash-Kette vorgesehen werden, die den Pseudo-Wertebereich "Out of range" repräsentiert, d.h. der aktuelle Messwert fällt nicht in einen der vorhandenen Wertebereiche. Es können dafür auch zwei Hash-Ketten dafür vorgesehen werden (z.B. "too_HIGH" und "too_LOW"), um zu unterscheiden, ob der aktuelle Messwert über oder unter dem durch die vorhandenen Wertebereich-Nachrichten darstellbaren Wertebereichen liegt.

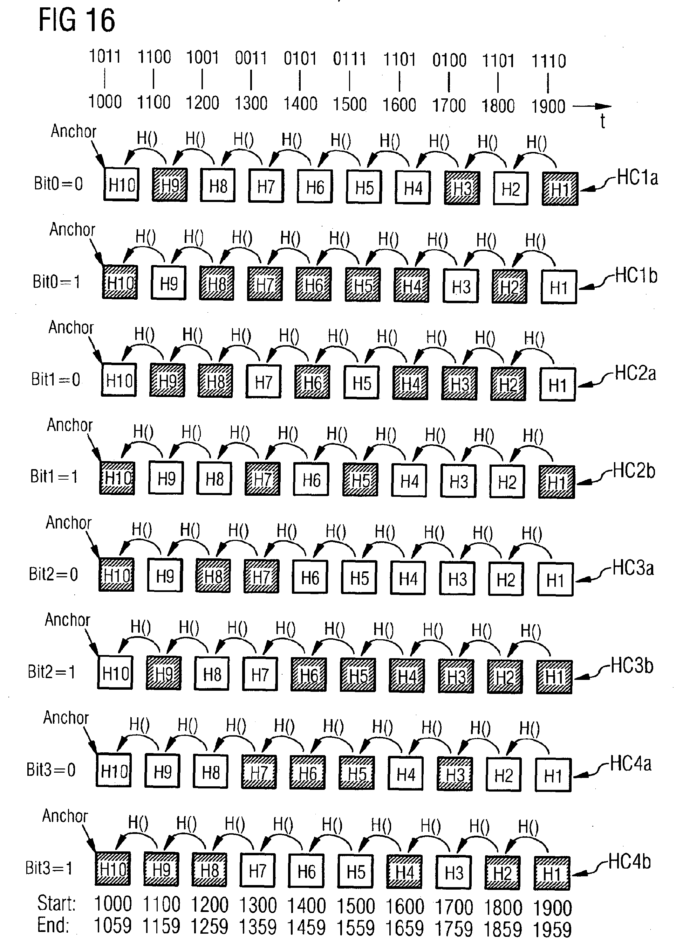

In einer weiteren Ausgestaltungsvariante wird ein Datenwert binär codiert, z.B. als 4 Bit, 8 Bit, 12 Bit oder 16 Bit Datenwert. Für einen 4 Bit-Datenwert werden dann für jede BitPosition jeweils zwei Hash-Ketten HC1a, HC1b für ein Bit 0, HC2a, HC2b für ein Bit 1, HC3a, HC3b für ein Bit 2 und HC4a, HC4b für ein Bit 3 vorgesehen, wobei die mit dem Index "a" gekennzeichnete Hash-Kette den Bitwert 0 und die mit dem Index "b" gekennzeichnete Hash-Kette den Bitwert 1 repräsentiert. Es werden dann diejenigen aktuellen Hash-Werte derjenigen Hash-Ketten veröffentlicht, die dem aktuellen Datenwert entsprechen. Dies bedeutet, für jedes Bit wird entweder der Wert der Hash-Kette bekannt gemacht, die dem Wert 0 entspricht, oder der Wert der Hash-Kette, die dem Wert 1 entspricht. Es werden also bei einer Codierung von z.B. 4 Bit je Messwert jeweils vier Hash-Werte bekannt gemacht. Dies ist exemplarisch in Fig. 16 dargestellt. Zum Zeitpunkt t = 1000 ist der Datenwert beispielsweise 1011, wobei das höchstwertige Bit 3 links und das niedrigstwertige Bit 0 rechts wiedergegeben ist.

In einer nicht dargestellten Variante stellt nicht ein Sensorknoten eine Wertebereich-Nachricht aus, sondern der Sensorknoten fügt der Statusnachricht eine Prüfsumme abhängig davon hinzu, ob der zu sendende Datenwert innerhalb der Schranken der Wertebereich-Nachricht liegt.

## Patentansprüche

1. Verfahren zum Übertragen von Daten in einem Sensornetzwerk (NET), umfassend zumindest einen Sensorknoten (S) und einen zentralen Rechner (GW), bei dem
- der zumindest eine Sensorknoten (S) wiederholt eine Statusnachricht (M) an den zentralen Rechner (GW) überträgt, welche zumindest einen eindeutigen, dem Sensorknoten (S) zugeordneten Kennzeichner (S-ID) und einen von dem Sensorknoten ermittelten Datenwert (Mess) umfasst,
- dem zentralen Rechner (GW) für den zumindest einen Sensorknoten (S) zumindest eine geschützte Wertebereich-Nachricht (WBS) bereitgestellt wird, die für eine jeweilige Zeitspanne gültig ist und die zumindest Schranken für gültige Datenwerte (Mess) umfasst, und
- durch den zentralen Rechner (GW) der in einer Statusnachricht (M) enthaltene Wert nur dann weiter verarbeitet wird, wenn der Datenwert innerhalb der in der Wertebereich-Nachricht (WBS) angegebenen Schranken liegt.

2. Verfahren nach Anspruch 1, bei dem ein jeweiliger Sensorknoten (S) die zumindest eine geschützte Wertebereich-Nachricht (WBS) selbst erstellt und an den zentralen Rechner (GW) überträgt.

3. Verfahren nach Anspruch 1 oder 2, bei dem die Wertebereich-Nachricht eine Prüfsumme (Sig) umfasst.

4. Verfahren nach einem der Ansprüche 1 bis 3, bei dem die Statusnachricht (M) keine Prüfsumme umfasst.

5. Verfahren nach einem der Ansprüche 1 bis 3, bei dem die Statusnachricht (M) eine Prüfsumme umfasst.

6. Verfahren nach einem der Ansprüche 1 bis 5, bei dem die Schranken der Wertebereich-Nachricht (WBS) durch eine Obergrenze und eine Untergrenze angegeben sind.

7. Verfahren nach einem der Ansprüche 1 bis 5, bei dem die Schranken der Wertebereich-Nachricht (WBS) durch einen Referenzwert und einen ein- oder beidseitigen Toleranzwert angegeben sind.

8. Verfahren nach einem der Ansprüche 1 bis 5, bei dem die Schranken der Wertebereich-Nachricht (WBS) durch eine zeitabhängige Prädiktionsfunktion und eine Toleranz angegeben sind.

9. Verfahren nach einem der vorhergehenden Ansprüche, bei dem die Schranken der Wertebereich-Nachricht (WBS) und/oder die Zeitspanne der Gültigkeit der Schranken in Abhängigkeit zumindest eines vorgegebenen Parameters angepasst werden.

10. Verfahren nach Anspruch 9, bei dem der vorgegebene Parameter umfasst:
- eine zeitliche Änderungsgeschwindigkeit des Datenwerts (Mess); und/oder
- einen oder mehrere statistische Werte zur Erfassung der Streuung des Datenwerts; und/oder
- einen Ladezustand eines Energiespeichers des Sensorknotens (S); und/oder
- eine Häufigkeit, mit der die Statusnachrichten an den zentralen Rechner (GW) übertragen werden.

11. Verfahren nach einem der vorhergehenden Ansprüche, bei dem der zumindest eine Sensorknoten (S) und der zentrale Rechner (GW) zeitlich zueinander synchronisiert werden.

12. Verfahren nach einem der Ansprüche 1 bis 11, bei dem die Wertebereich-Nachricht (WBS) regelmäßig wiederkehrend von dem zumindest einen Sensorknoten (S) an den zentralen Rechner (GW) übertragen wird.

13. Verfahren nach einem der Ansprüche 1 bis 11, bei dem die Wertebereich-Nachricht (WBS) auf Anforderung des zentralen Rechners (GW) von dem zumindest einen Sensorknoten (S) an den zentralen Rechner (GW) übertragen wird.

14. Verfahren nach einem der vorhergehenden Ansprüche, bei dem die Wertebereich-Nachricht (WBS), insbesondere die Prüfsumme der Wertebereich-Nachricht (WBS), einen Ankerwert und, optional die Länge, einer Hash-Kette umfasst.

15. Verfahren nach Anspruch 14, bei dem mehrere Wertebereich-Nachrichten (WBS) für einen jeweiligen Sensorknoten (S) bereitgestellt werden, wobei die mehreren Wertebereich-Nachrichten (WBS) jeweils unterschiedliche Schranken und jeweils einen unterschiedlichen Ankerwert einer jeweils unterschiedlichen Hash-Kette umfassen.

16. Verfahren nach einem der vorhergehenden Ansprüche, bei dem die Daten mehrerer Wertebereich-Nachrichten (WBS) in einer Super-Wertebereich-Nachricht (SWBS) zusammengefasst werden, wobei die Super-Wertebereich-Nachricht (SWBS) eine Prüfsumme umfasst.

17. Verfahren nach Anspruch 16, bei dem die Schranken der mehreren Wertebereich-Nachrichten (WBS) überlappungsfrei oder überlappend sind.

18. Computerprogrammprodukt, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf einem Computer läuft.

19. Sensorknoten für die Verwendung in einem Sensornetzwerk zur Durchführung des Verfahrens nach einem der Ansprüche 1 bis 17, der dazu eingerichtet ist,
- wiederholt eine Statusnachricht (M) an den zentralen Rechner (GW) zu übertragen, welche zumindest einen eindeutigen, dem Sensorknoten (S) zugeordneten Kennzeichner (S-ID) und einen von dem Sensorknoten ermittelten Datenwert (Mess) umfasst,
- dem zentralen Rechner (GW) für den zumindest einen Sensorknoten (S) zumindest eine geschützte Wertebereich-Nachricht (WBS) bereit zu stellen, die für eine jeweilige Zeitspanne gültig ist und die zumindest Schranken für gültige Datenwerte (Mess) umfasst.

20. Zentral-Rechner für die Verwendung in einem Sensornetzwerk zur Durchführung des Verfahrens nach einem der vorhergehenden Ansprüche, der dazu eingerichtet ist,
- von zumindest einem Sensorknoten (S) wiederholt eine Statusnachricht (M) zu empfangen, welche zumindest einen eindeutigen, dem Sensorknoten (S) zugeordneten Kennzeichner (S-ID) und einen von dem Sensorknoten ermittelten Datenwert (Mess) umfasst,
- für den zumindest einen Sensorknoten (S) zumindest eine geschützte Wertebereich-Nachricht (WBS) zu empfangen, die für eine jeweilige Zeitspanne gültig ist und die zumindest Schranken für gültige Datenwerte (Mess) umfasst, und
- den in einer Statusnachricht (M) enthaltenen Wert nur dann weiter zu verarbeiten, wenn der Datenwert innerhalb der in der Wertebereich-Nachricht (WBS) angegebenen Schranken liegt.

## Claims

1. Method for transmitting data in a sensor network (NET), including at least one sensor node (S) and a central processor (GW), in which
- the at least one sensor node (S) repeatedly transmits a status message (M) to the central processor (GW), which includes at least one unique identifier (S-ID) assigned to the sensor node (S) and a data value (Mess) determined by the sensor node,
- at least one protected value range message (WBS) is provided to the central processor (GW) for the at least one sensor node (S), said value range message being valid for a respective time period and including at least bounds for valid data values (Mess), and
- the value contained in a status message (M) is only then processed further by the central processor (GW) if the data value lies within the bounds specified in the value range message (WBS).

2. Method according to claim 1, in which a respective sensor node (S), creates the at least one protected value range message (WBS) itself and transmits it to the central processor (GW).

3. Method according to claim 1 or 2, in which the value range message includes a check sum (Sig).

4. Method according to one of claims 1 to 3, in which the status message (M) does not include a check sum.

5. Method according to one of claims 1 to 3, in which the status message (M) includes a check sum.

6. Method according to one of claims 1 to 5, in which the bounds of the value range message (WBS) are specified by an upper limit and a lower limit.

7. Method according to one of claims 1 to 5, in which the bounds of the value range message (WBS) are specified by a reference value and a one or two-sided tolerance value.

8. Method according to one of claims 1 to 5, in which the bounds of the value range message (WBS) are specified by a time-dependent prediction function and a tolerance.

9. Method according to one of the preceding claims, in which the bounds of the value range message (WBS) and/or the time period of the validity of the bounds are adjusted as a function of at least one predetermined parameter.

10. Method according to claim 9, in which the predetermined parameter includes:
- a temporal change in speed of the data value (Mess); and/or
- one or more statistical values to detect the scattering of the data value; and/or
- a charge state of an energy memory of the sensor node (S); and/or
- a frequency with which the status messages are transmitted to the central processor (GW).

11. Method according to one of the preceding claims, in which the at least one sensor node (S) and the central processor (GW) are synchronised with respect to one another.

12. Method according to one of claims 1 to 11, in which the value range message (WBS) is regularly repeatedly transmitted from the at least one sensor node (S) to the central processor (GW).

13. Method according to one of claims 1 to 11, in which the value range message (WBS) is transmitted from the at least one sensor node (S) to the central processor (GW) on request from the central processor (GW).

14. Method according to one of the preceding claims, in which the value range message (WBS), in particular the check sum of the value range message (WBS), includes an anchor value and, optionally, the length of a hash chain.

15. Method according to claim 14, in which a number of value range messages (WBS) are provided for a respective sensor node (S), whereby the number of value range messages (WBS) each include different bounds and a different anchor value of a respectively different hash chain in each instance.

16. Method according to one of the preceding claims, in which the data of a number of value range messages (WBS) is combined in a super value range message (SWBS), whereby the super value range message (SWBS) includes a check sum.

17. Method according to claim 16, in which the bounds of the number of value range messages (WBS) are free or overlap or overlap.

18. Computer program product, which can be loaded directly into the internal memory of a digital computer and includes software code segments, with which the steps are executed according to one of the preceding claims if the product runs on a computer.

19. Sensor node for use in a sensor network for implementing Method according to one of claims 1 to 17, which is set up
- to repeatedly transmit a status message (M) to the central processor (GW), which includes at least one unique identifier (S-ID) assigned to the sensor node and a data value (Mess) determined by the sensor node,
- to provide at least one protected value range message (WBS) to the central processor (GW) for the at least one sensor node, said value range message being valid for a respective time period and including at least the bounds for valid data values (Mess).

20. Central processor for use in a sensor network for implementing Method according to one of the preceding claims, which is set up
- to repeatedly receive a status message (M) from at least one sensor node, which includes at least one unique identifier (S-ID) assigned to the sensor node (S) and a data value (Mess) determined by the sensor node,
- to receive at least one protected value range message (WBS) for the at least one sensor node (S), which is valid for a respective time period and includes at least bounds for valid data values (Mess) and
- to only then further process the value contained in a status message (M) if the data value lies within the bounds specified in the value range message (WBS).

## Revendications

1. Procédé de transmission de données dans un réseau de capteurs (NET) comprenant au moins un noeud de capteurs (S) et un ordinateur central (GW), selon lequel :
- l'au moins un noeud de capteurs (S) transmet de manière répétée à l'ordinateur central (GW) un message de statut (M) qui comprend au moins un identifiant univoque (S-ID) associé au noeud de capteurs (S) et une valeur de données (Mess) déterminée par le noeud de capteurs ;
- au moins un message protégé de plage de valeurs (WBS) valable pour un laps de temps respectif et comprenant au moins des bornes pour des valeurs de données valables (Mess) est fourni à l'ordinateur central (GW) pour l'au moins un noeud de capteurs (S), et
- la valeur contenue dans un message de statut (M) ne fait l'objet d'un traitement subséquent par l'ordinateur central (GW) que si la valeur de données se trouve dans les limites des bornes indiquées dans le message de plage de valeurs (WBS).

2. Procédé selon la revendication 1, selon lequel un noeud de capteurs respectif (S) crée lui-même l'au moins un message protégé de plage de valeurs (WBS) et le transmet à l'ordinateur central (GW).

3. Procédé selon la revendication 1 ou 2, selon lequel le message de plage de valeurs comprend une somme de contrôle (Sig).

4. Procédé selon l'une des revendications 1 à 3, selon lequel le message de statut (M) ne comprend pas de somme de contrôle.

5. Procédé selon l'une des revendications 1 à 3, selon lequel le message de statut (M) comprend une somme de contrôle.

6. Procédé selon l'une des revendications 1 à 5, selon lequel les bornes du message de plage de valeurs (WBS) sont indiquées par une limite supérieure et par une limite inférieure.

7. Procédé selon l'une des revendications 1 à 5, selon lequel les bornes du message de plage de valeurs (WBS) sont indiquées par une valeur de référence et par une valeur de tolérance unilatérale ou bilatérale.

8. Procédé selon l'une des revendications 1 à 5, selon lequel les bornes du message de plage de valeurs (WBS) sont indiquées par une fonction de prédiction dépendante du temps et par une tolérance.

9. Procédé selon l'une des revendications précédentes, selon lequel les bornes du message de plage de valeurs (WBS) et/ou le laps de temps de la validité des bornes sont adaptés en fonction d'au moins un paramètre prédéfini.

10. Procédé selon la revendication 9, selon lequel le paramètre prédéfini inclut :
- une vitesse de modification temporelle de la valeur de données (Mess) et/ou
- une ou plusieurs valeurs statistiques pour détecter la dispersion de la valeur de données et/ou
- un état de charge d'un accumulateur d'énergie du noeud de capteurs (S) et/ou
- une fréquence à laquelle les messages de statut sont transmis à l'ordinateur central (GW).

11. Procédé selon l'une des revendications précédentes, selon lequel l'au moins un noeud de capteurs (S) et l'ordinateur central (GW) sont synchronisés temporellement entre eux.

12. Procédé selon l'une des revendications 1 à 11, selon lequel le message de plage de valeurs (WBS) est transmis de manière répétée régulièrement de l'au moins un noeud de capteurs (S) à l'ordinateur central (GW).

13. Procédé selon l'une des revendications 1 à 11, selon lequel le message de plage de valeurs (WBS) est transmis, sur requête de l'ordinateur central (GW), de l'au moins un noeud de capteurs (S) à l'ordinateur central (GW).

14. Procédé selon l'une des revendications précédentes, selon lequel le message de plage de valeurs (WBS), en particulier la somme de contrôle du message de plage de valeurs (WBS), comprend une valeur d'ancrage et, optionnellement, la longueur d'une chaîne de hachage.

15. Procédé selon la revendication 14, selon lequel plusieurs messages de plage de valeurs (WBS) sont fournis pour un noeud de capteurs respectif (S), les plusieurs messages de plage de valeurs (WBS) comprenant respectivement différentes bornes et respectivement une valeur d'ancrage différente d'une chaîne de hachage respectivement différente.

16. Procédé selon l'une des revendications précédentes, selon lequel les données de plusieurs messages de plage de valeurs (WBS) sont regroupées dans un supermessage de plage de valeurs (SWBS), le supermessage de plage de valeurs (SWBS) comprenant une somme de contrôle.

17. Procédé selon la revendication 16, selon lequel les bornes des plusieurs messages de plage de valeurs (WBS) se chevauchent ou ne se chevauchent pas.

18. Produit de programme informatique qui peut être chargé directement dans la mémoire interne d'un ordinateur numérique et qui comprend des segments de code logiciel permettant d'exécuter les étapes selon l'une des revendications précédentes lorsque le produit tourne sur un ordinateur.

19. Noeud de capteurs destiné à être utilisé dans un réseau de capteurs pour exécuter le procédé selon l'une des revendications 1 à 17, ledit noeud étant configuré pour :
- transmettre de manière répétée à l'ordinateur central (GW) un message de statut (M) qui comprend au moins un identifiant univoque (S-ID) associé au noeud de capteurs (S) et une valeur de données (Mess) déterminée par le noeud de capteurs ;
- fournir à l'ordinateur central (GW), pour l'au moins un noeud de capteurs (S), au moins un message protégé de plage de valeurs (WBS) valable pour un laps de temps respectif et comprenant au moins des bornes pour des valeurs de données valables (Mess).

20. Ordinateur central destiné à être utilisé dans un réseau de capteurs pour exécuter le procédé selon l'une des revendications précédentes, ledit ordinateur étant configuré pour :
- recevoir de l'au moins un noeud de capteurs (S), de manière répétée, un message de statut (M) qui comprend au moins un identifiant univoque (S-ID) associé au noeud de capteurs (S) et une valeur de données (Mess) déterminée par le noeud de capteurs ;
- recevoir, pour l'au moins un noeud de capteurs (S), au moins un message protégé de plage de valeurs (WBS) valable pour un laps de temps respectif et comprenant au moins des bornes pour des valeurs de données valables (Mess), et
- ne traiter la valeur contenue dans un message de statut (M) que si la valeur de données se trouve dans les limites des bornes indiquées dans le message de plage de valeurs (WBS).
